# EUROPEAN PATENT SPECIFICATION

(11) **EP 3 276 393 B1**
(45) Date of publication and mention of the grant of the patent: **11.10.2023**
(21) Application number: 17180953.6
(22) Date of filing: 12.07.2017
(51) Int. Cl.: G02B 26/08, B81B 3/00, H01L 21/302

(54) **LIGHT DEFLECTOR, OPTICAL SCANNING DEVICE, IMAGE FORMING APPARATUS, IMAGE PROJECTION APPARATUS, AND METHOD FOR MANUFACTURING THE LIGHT DEFLECTOR**
LICHTDEFLEKTOR, VORRICHTUNG ZUR OPTISCHEN ABTASTUNG, BILDERZEUGUNGSVORRICHTUNG, BILDPROJEKTIONSVORRICHTUNG UND VERFAHREN ZUR HERSTELLUNG DES LICHTDEFLEKTORS
DÉFLECTEUR DE LUMIÈRE, DISPOSITIF DE BALAYAGE OPTIQUE, APPAREIL DE FORMATION D'IMAGES, APPAREIL DE PROJECTION D'IMAGES ET PROCÉDÉ DE FABRICATION DU DÉFLECTEUR DE LUMIÈRE

(30) Priority: 26.07.2016 JP 2016146738
(43) Date of publication of application: 31.01.2018
(73) Proprietor: Ricoh Company, Ltd., Tokyo 143-8555 (JP)
(72) Inventor: ISHIMOTO, Yukiyoshi, Tokyo 143-8555 (JP)
(74) Representative: SSM Sandmair

(56) References cited:
- EP-A2- 0 614 101
- US-A1- 2007 025 659

## Description

### BACKGROUND

### Technical Field

Embodiments of the present disclosure relate to a light deflector, an optical scanning device, an image forming apparatus, an image projection apparatus, and a method for manufacturing the light deflector.

### Background Art

A light deflector manufactured using micro-electromechanical systems (MEMS) technology, and an optical scanning device, an image forming apparatus, and an image projection apparatus, each provided with such a light deflector, can provide a reduction in power consumption and device size and an increase in speed as compared to devices using polygon mirrors or typical galvano mirrors. Further, a drive unit of such a light deflector uses a silicon (Si) wafer, particularly silicon on insulator (SOI), using semiconductor micromachining technology, which may allow for mass production at low-cost. Thus such drive units are expected to be commercialized.

The above-described SOI wafer has a three-layer structure (hereinafter, referred to as a SOI substrate) in which single-crystal silicon as a support substrate, a silicon oxide film, which is referred to as a buried oxide layer (hereinafter, referred to as a BOX layer), and another single-crystal silicon layer, which is referred to as an active layer, are disposed in the recited order.

It has been known that a light deflector manufactured using the above-described technology rotates movable plates (mirrors) in two directions, respectively, by various driving methods, such as electromagnetic force, electrostatic force, and a electrostrictive elements (piezoelectric force), thereby to perform two-dimensional optical scanning.

In such a light deflector, a metal wiring material, which is made of silicon (Si) wafer, is used to connect between the input-output signal line, and the upper electrode and the lower electrode, so as to obtain the electromagnetic force, electrostatic force, and piezoelectric force for driving a reflection plate as a mirror unit. Preferably, a silicon nitride film and a silicon oxide film are provided as a reliable protection layer for the wiring material (refer, for example, to JP-2014-035429-A).

However, a bar unit that drives the above-described mirror is made of silicon of the SOI active layer, which is hereinafter referred to as a silicon active layer. The above-described protection layer is either entirely removed, or remains unremoved in the manufacturing process. However, when the protection layer is entirely removed, an unstable vibration is induced by the side surface of the bar unit being roughed. When the protection layer remains unremoved, the protection layer might peel off during the drive operation of the bar unit.

### SUMMARY

In one aspect of this disclosure, there is provided an improved light deflector as defined in claim 1, comprising a movable unit having a reflecting surface to reflect light, a support to support the movable unit, and a bar unit connecting the movable unit with the support. The bar unit includes a pair of elastic support members to movably support the movable unit, and a pair of drive bars, each including a silicon active layer, a piezoelectric section, a first protection layer, and a second protection layer in the recited order. The pair of elastic support members each includes the first protection layer.

In another aspect of this disclosure, there is provided an improved optical scanning device including the above-described light deflector. The optical scanning device projects the light deflected by the light deflector onto a surface to be scanned by the optical scanning device, at a speed.

In still another aspect of this disclosure, there is provided an improved image forming apparatus including the above-described optical scanning device.

In yet another aspect of this disclosure, there is provided an improved image projection apparatus including the above-described optical scanning device.

In further aspect of this disclosure, there is provided an improved method for manufacturing a light deflector as defined in claim 6, including forming, in a recited order, a lower electrode, a piezoelectric section, and an upper electrode on a first protection layer disposed on a silicon active layer of a bar unit; forming at least a second protection layer rather than another first protection layer, to cover the lower electrode, the piezoelectric section, the upper electrode, and the first protection layer disposed on the silicon active layer of the bar unit, forming a reflecting surface to reflect light, on the second protection layer, patterning the at least the second protection layer, and etching only the second protection layer such that the second protection layer is partly removed and the first protection layer remains on the silicon active layer of the bar unit.

The embodiments of the present disclosure can provide a light deflector that achieves a stable vibration and good durability (reliability).

### BRIEF DESCRIPTION OF THE DRAWINGS

The aforementioned and other aspects, features, and advantages of the present disclosure will be better understood by reference to the following detailed description when considered in connection with the accompanying drawings, wherein:
FIG. 1 is a schematic diagram of an example light deflector in packaged form according to a first embodiment of the present disclosure;
FIG. 2 is a plan view of the light deflector according to an embodiment of the present disclosure;
FIG. 3 is a sectional view of the light deflector cut along Line P-Pa in FIG. 2;
FIG. 4 is a sectional view of the light deflector cut along Line Q-Qa in FIG. 2;
FIGs. 5A and 5B each is a perspective view of a second drive unit of the light deflector according to the first embodiment;
FIGs. 6A through 6D are illustrations of processes for manufacturing a light deflector according to a comparative example;
FIGs. 7A through 7D are illustrations of further processes following the process for manufacturing the light deflector according to the comparative example of FIG. 6D;
FIGs. 8A and 8B are illustrations of still further processes following the process for manufacturing the light deflector according to the comparative example of FIG. 7D;
FIGs. 9A through 9C are illustrations of a main process for manufacturing the light deflector according to a first embodiment;
FIG. 10A is a plan view of a light deflector according to a first comparative example;
FIG. 10B is a plan view of a light deflector according to a second comparative example;
FIG. 10C is a plan view of the light deflector according to the first embodiment;
FIG. 11A is an illustration of layer separation that occurs due to extended driving operation of the light deflector according to the first comparative example;
FIG. 11B is an illustration of no layer separation that occurs due to the long-time driving operation of the light deflector according to the first embodiment;
FIG. 12A is a sectional view of a torsion bar according to a second comparative example that has been photoresist-patterned after an insulating layer of the torsion bar is etched, describing a side-surface roughness of an etched silicon active layer of the torsion bar;
FIG. 12B is a sectional view of a torsion bar according to a first embodiment that has been photoresist-patterned after an insulating layer of the torsion bar is etched, describing the prevention of the side-surface roughness of an etched silicon active layer of the torsion bar;
FIG. 13 is a perspective view of a light deflector according to a variation of the first embodiment;
FIG. 14 is a schematic illustration of an example image forming apparatus according to a second embodiment of the present disclosure;
FIG. 15 is a perspective view of an example optical scanning device in FIG. 14;
FIG. 16 is a perspective view of an example configuration of a light deflector in FIG. 14; and
FIG. 17 is an illustration of an example configuration of an image projection apparatus according to a third embodiment.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results.

Although the embodiments are described with technical limitations with reference to the attached drawings, such description is not intended to limit the scope of the disclosure and all of the components or elements described in the embodiments of this disclosure are not necessarily indispensable.

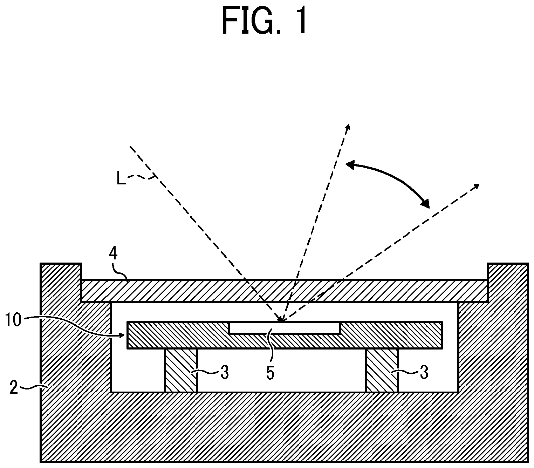

With reference to FIG. 1, a description is provided of embodiments of the present disclosure, referring to the drawings. The same reference numerals will be given to constituent elements such as parts and materials having the same functions and shapes, and the descriptions thereof will be omitted.

### PACKAGING

FIG. 1 is a schematic diagram of an example light deflector 10 in a packaged form according to an embodiment of the present disclosure.

As illustrated in FIG. 1, the light deflector 10 includes a reflecting surface 5 to reflect a light beam L, such as a laser light. The light deflector 10 is mounted on a mounting member 3 in the interior of a packaging member 2. The packaging member 2 is sealed by a transmissive member 4 so that the light deflector 10 is packaged in the packaging member 2.

The sealed packaging member 2 that houses the light deflector 10 contains inert gas such as nitrogen gas. This configuration can prevent the deterioration of the light deflector 10 due to oxidation, and increase the durability against changes in environment such as temperature.

### Light Deflector

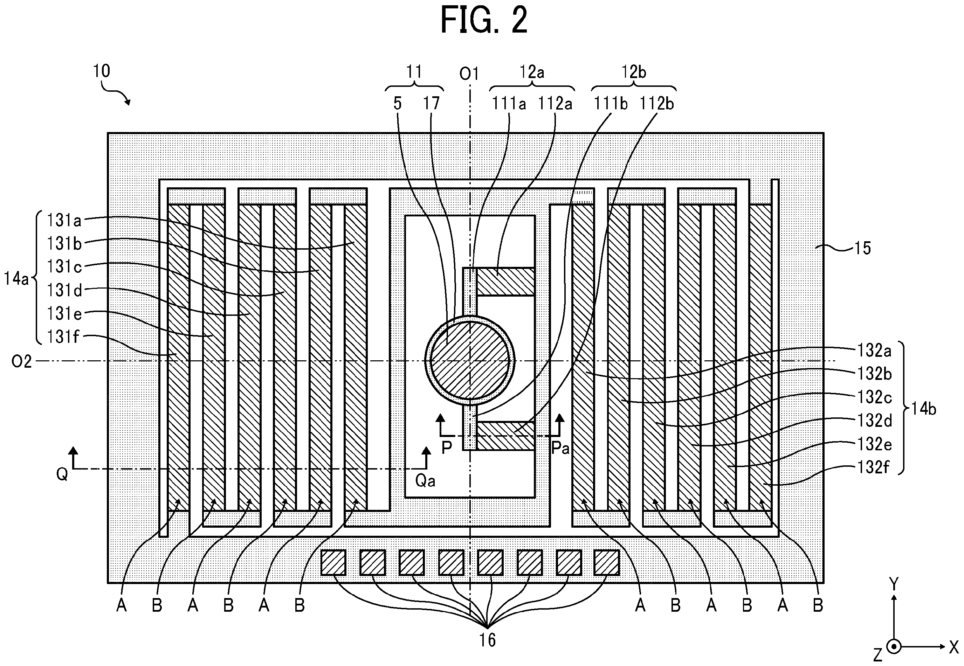

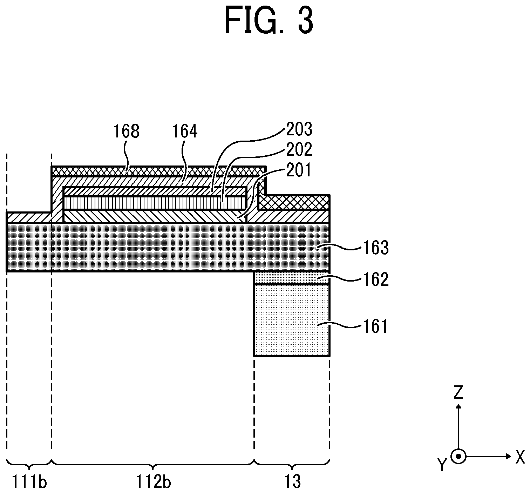

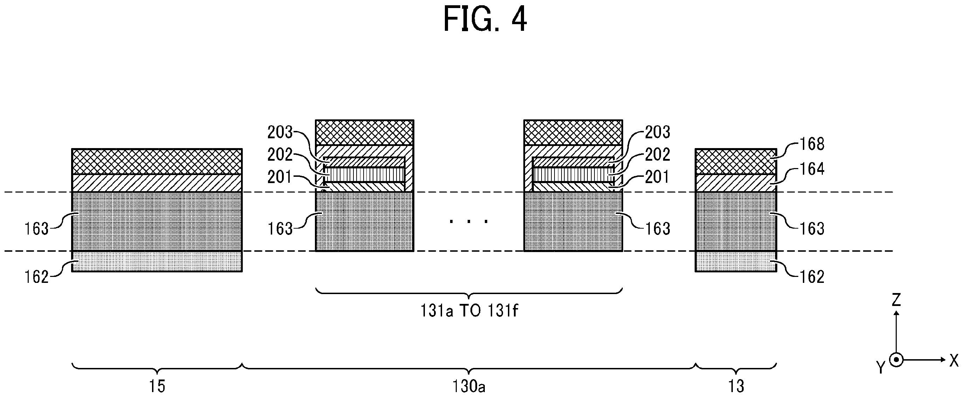

Referring to FIGs. 2 through 4, a detailed description is given of the light deflector 10 according to an embodiment of the present disclosure. FIG. 2 is a plan view of the light deflector 10 that is capable of deflecting light in two directions, i.e., a Y axis as a main-scanning direction and an X axis as a sub-scanning direction. FIG. 3 is a sectional view of the light deflector 10 cut along Line P-Pa in FIG. 2. FIG. 4 is a sectional view of the light deflector 10 cut along Line Q-Qa in FIG. 2.

As illustrated in FIG. 2, the light deflector 10 includes a mirror unit 11, first drive units 12a and 12b, and a first supporting section 13. The mirror unit 11 reflects a light beam having entered the mirror unit 11. The first drive units 12a and 12b, which are connected with the mirror unit 11, drive the mirror unit 11 to rotate around a first axis O1 that is parallel to the Y axis. The first supporting section 13 supports the mirror unit 11 and the first drive units 12a and 12b. The light deflector 10 further includes second drive units 14a and 14b, a second supporting section 15, and electrode connecting parts 16. The second drive units 14a and 14b, which are connected with the first supporting section 13, drive the mirror unit 11 and the first supporting section 13 to rotate around a second axis O2 that is parallel to the X axis. The second supporting section 15 supports the second drive units 14a and 14b. The electrode connecting parts 16 are electrically connected with the first drive units 12a and 12b, the second drive units 14a and 14b, and a controller.

As illustrated in FIG. 3, the light deflector 10 includes, for example, one SOI substrate that is formed by any appropriate treatment method, such as etching. On the formed SOI substrate, a reflecting surface 5, first piezoelectric drive units 112a and 112b, second piezoelectric drive units 131a through 131f and 132a through 132f, and the electrode connecting parts 16 are formed, which constitutes an integral structure of the above-described components.

Note that, the above-described components may be formed after the formation of the SOI substrate, or may be formed during the formation of the SOI substrate.

As illustrated in FIGs. 3 and 4, the SOI substrate is a silicon substrate including a silicon support layer 161 as a first silicon layer composed of, for example, single crystal silicon (Si), a buried oxide layer (BOX) layer 162 composed of oxide silicon (SiO2) disposed on the silicon support layer 161, and a silicon active layer 163 as a second silicon layer disposed on the BOX layer 162.

The silicon active layer 163 has a smaller thickness in the Z-axis direction than the thickness in the X-axis direction or the Y-axis direction. With such a configuration, any member made of the silicon active layer 163 serves as an elastic member having elasticity.

In the present embodiment for example, both of the first drive units 12a and 12b and the second drive units 14a and 14b include the silicon active layer 163 as a base material, thereby serving as the elastic member.

In the light deflector 10 according to the present embodiment, at least each of the first supporting section 13 and the second supporting section 15 preferably includes the silicon support layer 161.

With a configuration in which each of the first supporting section 13 and the second supporting section 15 includes the silicon support layer 161, the first supporting section 13 and the second supporting section 15 increase in thickness in the Z-axis direction, which leads to a reduction or prevention of the elastic deformation of each of the first supporting section 13 and the second supporting section 15, thus increasing the accuracy of operation of the light deflector 10.

The mirror unit 11 includes, for example, a round base 17 of the mirror unit 11 (mirror-unit base 17) and the reflecting surface 5 formed on the +Z-side of the mirror-unit base 17. The reflecting surface 5 includes a thin metal film made of, for example, aluminum (Al), gold (Au), and silver (Ag). The mirror unit 11 serves as a movable section provided with the reflecting surface 5 to reflect light.

The mirror unit 11 may include a rib for strengthening the mirror unit 11, on the -Z-side surface of the mirror-unit base 17. Such a rib includes, for example, the silicon active layer 163 and an oxide silicon layer 164, serving to prevent the deformation of the reflecting surface 5 due to the operation of the mirror unit 11.

The first drive units 12a and 12b include two torsion bars 111a and 111b as an example of a pair of elastic supporting members (bars), and a pair of first piezoelectric drive units 112a and 112b as an example of a pair of drive bars. Each one end of the torsion bars 111a and 111b is connected with the mirror-unit base 17, extending along the first axis O1 to support the mirror unit 11 in a movable manner. One end (a first end) of the first piezoelectric drive unit 112a (112b) is connected with the other end (a second end) of the torsion bar 111a (111b), respectively. The other ends of the first piezoelectric drive units 112a and 112b are connected to the inner surface of the first supporting section 13.

As illustrated in FIG. 3, the torsion bars 111a and 111b each includes the silicon active layer (the second silicon layer) 163. The first piezoelectric drive units 112a and 112b each includes the silicon active layer 163 (the second silicon layer) as the elastic member, a lower electrode 201, a piezoelectric section 202, and an upper electrode 203. The lower electrode 201, the piezoelectric section 202, and the upper electrode 203 are formed on the +Z-side surface of the silicon active layer 163.

Each of the upper electrode 203 and the lower electrode 201 is made of, for example, Au or platinum (Pt). The piezoelectric section 202 is made of, for example, lead zirconate titanate (PZT) as piezoelectric material.

As described above, the torsion bars 111a and 111b serve as a bar that connects the mirror unit 11 to the first supporting section 13 and the second supporting section 15. The torsion bars 111a and 111b serve as an elastic support member in the present disclosure. The first piezoelectric drive units 112a and 112b serve as a drive bar in the present disclosure.

As illustrated in FIGs. 2 and 3, the first supporting section 13 includes, for example, the silicon support layer 161, the BOX layer 162, and the silicon active layer 163, forming a rectangular support that surrounds the mirror unit 11.

As described above, the first supporting section 13 that supports the mirror unit 11 as a movable unit serves as a support in a narrow sense in the present disclosure. The second supporting section 15 serves as the support in a broad sense in the present disclosure.

The second drive units 14a and 14b include a plurality of second piezoelectric drive units 131a through 131f (corresponding to 14a) and 132a through 132f (corresponding to 14b), which are coupled to form a meandering shape. One end of the second drive units 14a and 14b are connected to the outer surface of the first supporting section 13, and the other ends of the second drive units 14a and 14b are connected to the inner surface of the second supporting section 15.

In this case, a position to connect the second drive unit 14a with the first supporting section 13 and another position to connect the second drive unit 14b with the first supporting section 13 are symmetric with respect to the center point of the reflecting surface 5. In addition, a position to connect the second drive unit 14a with the second supporting section 15 and another position to connect the second drive unit 14b with the second supporting section 15 are symmetric with respect to the center point of the reflecting surface 5.

As illustrated in FIG. 4, the second piezoelectric drive unit 130a includes the silicon active layer 163 (the second silicon layer) as the elastic member, a lower electrode 201, a piezoelectric section 202, and an upper electrode 203. The lower electrode 201, the piezoelectric section 202, and the upper electrode 203 are formed on the +Z-side surface of the silicon active layer 163. The second piezoelectric drive section 130b has the same configuration as that of the second piezoelectric drive unit 130a.

Each of the upper electrode 203 and the lower electrode 201 is made of, for example, Au or platinum (Pt). The piezoelectric section 202 is made of, for example, PZT as piezoelectric material.

As illustrated in FIGs. 2 and 4, the second supporting section 15 includes, for example, the silicon support layer 161, the BOX layer 162, and the silicon active layer 163. The second supporting section 15 is a rectangular support that surrounds the mirror unit 11, the first drive units 12a and 12b, the first supporting section 13, and the second drive units 14a and 14b.

The electrode connecting parts 16 in FIG. 2 are formed, for example, on the +Z-side surface of the second supporting section 15. The electrode connecting parts 16 are electrically connected to the upper electrodes 203 and the lower electrodes of the first piezoelectric drive units 112a and 112b, the second piezoelectric drive units 131a through 131f and 132a through 132f, and to the controller via electrode wiring made of, e.g., Al.

The present disclosure is not limited to the above-described configuration, and each of the upper electrodes 203 or each of the lower electrodes 201 may be directly connected to the electrode connecting parts. Alternatively, in some embodiments, the upper electrodes 203 or the lower electrodes 201 are connected to each other, to be indirectly connected to the electrode connecting parts 16.

In the present embodiment, the piezoelectric section 202 is disposed on only one side (the +Z side) of the silicon active layer 163 as an elastic member. However, no limitation is intended herein. Alternatively, in some embodiments, the piezoelectric section 202 may be disposed on the other side (for example, the -Z side) of the elastic member (the silicon active layer 163). Alternatively, in some other embodiments, the piezoelectric section 202 may be disposed on both sides of the elastic member (the silicon active layer 163).

The shape of each component is not limited to the shape according to the present embodiment as long as the mirror unit 11 is driven to rotate about the first axis O1 or the second axis O2. For example, the torsion bars 111a and 111b and the first piezoelectric drive units 112a and 112b may have curvature.

Further, an insulating layer including the silicon oxide layer may be disposed on at least any one of the +Z-side surfaces of the upper electrodes 203 of the first drive units 12a and 12b, the first supporting section 13, the upper electrodes 203 of the second drive units 14a and 14b, and the second supporting section 15.

In this case, the electrode wiring is disposed on such an insulating layer, and the insulating layer is not partially removed to provide an opening or another insulating layer is formed at a position at which the electrode wiring is connected to the upper electrode 203 or the lower electrode 201. Such a configuration increases the degree of flexibility in design of the first drive units 12a and 12b, the second drive units 14a and 14b, and the electrode wiring, while preventing short-circuiting due to the electrodes contacting each other. The silicon oxide film also serves as an anti-reflection member.

FIG. 3 is an illustration of a characteristic configuration of the light deflector 10 according to the present disclosure. More specifically, as illustrated in FIG. 3, the oxide silicon layer 164 as a first protection layer, which covers the upper surface of the silicon active layer 163 and the upper electrode 203, covers an area in which the torsion bar 111b as the bar unit is formed. However, a silicon nitride layer 168 as a second protection layer, which covers the upper surface of the oxide silicon layer 164, does not cover the area in which the torsion bar 111b is formed.

Such a configuration can prevent the problem that the silicon nitride layer 168 might peel off from the oxide silicon layer 164 during extended driving of the light deflector 10. The same applies to the torsion bar 111a on the other side of the torsion bar 111b.

It is to be noted that the oxide silicon layer 164 and the silicon nitride layer 168 are passivation films that serve as the protection layer and the insulating layer. The method for forming such a passivation film is to be described below in the manufacturing process of the light deflector 10.

Each of the first drive units 12a and 12b and the second drive units 14a and 14b includes the piezoelectric section 202. When voltage that is positive or negative in the direction of polarization is applied to the piezoelectric section 202, the piezoelectric section 202 deforms (for example, expands and contracts) according to the electrical potential of the applied voltage, i.e., inverse piezoelectric effects occur. With the inverse piezoelectric effect, the first drive units 12a and 12b and the second drive units 14a and 14b allow the mirror unit 11 to move.

Accordingly, the mirror unit 11 deflects a light beam having entered the reflecting surface 5 of the mirror unit 11 at a certain angle, which is referred to as a deflection angle. When no voltage is applied to the piezoelectric section 202, the deflection angle is zero (0°). Any greater angles than the deflection angle of 0° are defined as a positive deflection angle, and any smaller angles than the deflection angle of 0° are defined as a negative deflection angle.

In the drive units 12a and 12b, the piezoelectric section 202 in each of the first piezoelectric drive units 112a and 112b deforms and vibrates when the drive voltage is applied in parallel from a drive section to the piezoelectric section 202 via the upper electrode 203 and the lower electrode 201. With such deformation and vibration of the piezoelectric section 202, the first piezoelectric drive units 112a and 112b bend and deform, vibrating, which causes the torsion bars 111a and 111b to be twisted.

The torsion bars 111a and 111b being twisted apply a drive force to the mirror unit 11 to rotate around the first axis O1, so that the mirror unit 11 can move while pivoting and vibrating around the first axis O1. The controller controls the drive voltage applied to the first drive units 12a and 12b.

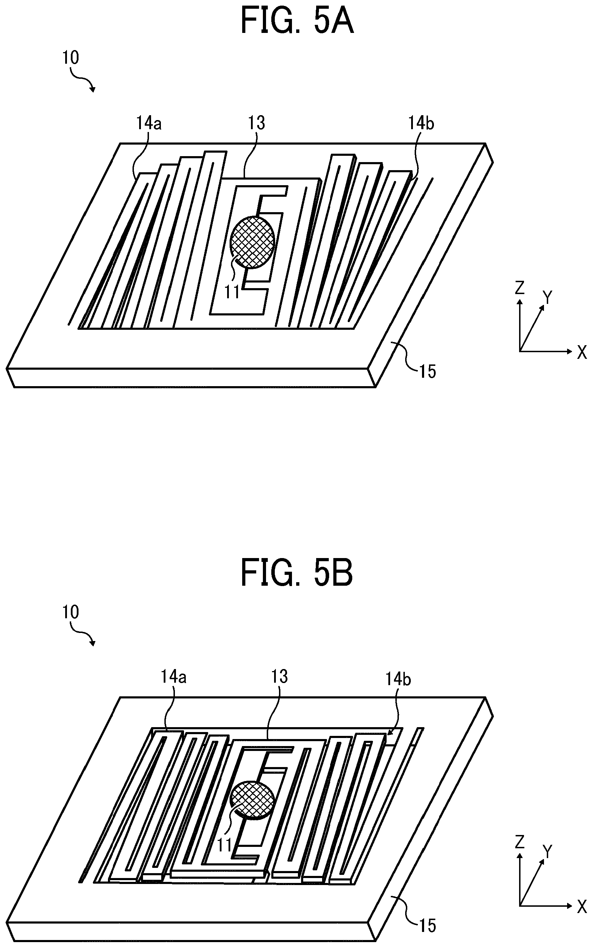

FIGs. 5A and 5B each is a perspective view of the second drive units 14a and 14b of the light deflector 10 for describing the drive operation of the second drive units 14a and 14b. In FIGs. 5A and 5B, the mirror unit 11 is represented by cross-hatching.

In the second drive unit 14a including a plurality of second piezoelectric drive units 131a through 131f in FIG. 2, the second piezoelectric drive units 131b, 131d, and 131f are categorized as a piezoelectric drive unit group A, each of which is an even-numbered second piezoelectric drive unit counted from the second piezoelectric drive unit 131a that is closest to the mirror unit 11.

In the second drive unit 14b including a plurality of second piezoelectric drive units 132a through 132f, the second piezoelectric drive units 132a, 132c, and 132e are also categorized as a piezoelectric drive unit group A, each of which is an odd-numbered second piezoelectric drive unit counted from the second piezoelectric drive unit 132a that is closest to the mirror unit 11. The second piezoelectric drive units of the piezoelectric drive unit group A having received the drive voltage applied in parallel bend and deform in the identical direction, so that the mirror unit 11 rotates around the second axis O2 to obtain a positive deflection angle.

Further, in the second drive unit 14a including the plurality of second piezoelectric drive units 131a through 131f, the second piezoelectric drive units 131a, 131c, and 131e are categorized as a piezoelectric drive unit group B, each of which is an odd-numbered second piezoelectric drive unit counted from the second piezoelectric drive unit 131a that is closest to the mirror unit 11.

In the second drive unit 14b including the plurality of second piezoelectric drive units 132a through 132f in FIG. 2, the second piezoelectric drive units 132b, 132d, and 132f are also categorized as the piezoelectric drive unit group B, each of which is an even-numbered second piezoelectric drive unit counted from the second piezoelectric drive unit 132a that is closest to the mirror unit 11. The second piezoelectric drive units of the piezoelectric drive unit group B having received the drive voltage applied in parallel bend and deform in the identical direction, so that the mirror unit 11 rotates around the second axis O2 to obtain a negative deflection angle as illustrated in FIG. 5B.

As illustrated in FIGs. 5A and 5B, a plurality of piezoelectric sections 202 of the piezoelectric drive unit group A or a plurality of piezoelectric sections 202 of the piezoelectric drive unit group B in the second drive unit 14a or the second drive unit 14b are caused to bend and deform, thereby accumulating the amount of movement of the mirror unit 11 caused by the bending and deflection of the piezoelectric sections 202, thus increasing the deflection angle of the mirror unit 11 that rotates around the second axis O2.

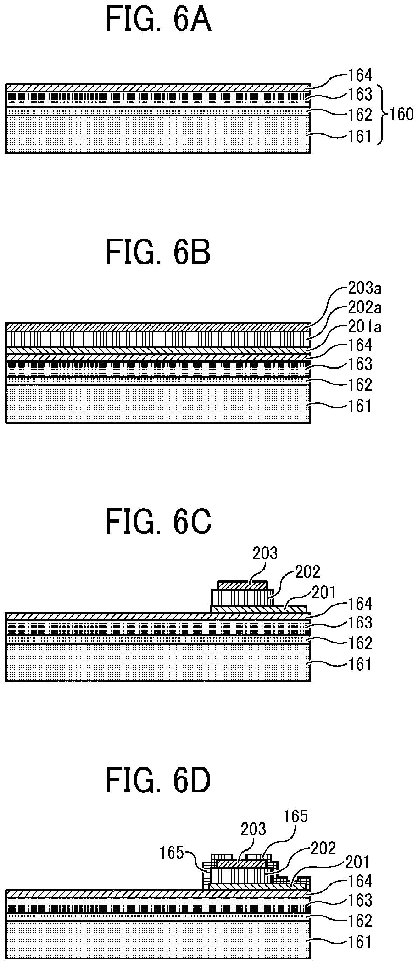

Referring to FIGs. 6A through 6D, 7A through 7D, 8A, and 8B, a description is given of a manufacturing process of a light deflector according to a comparative example. The manufacturing process disclosed in FIGs. 5A through 5C of JP-2014-035429-A partly corresponds to the manufacturing process according to the comparative example as a typical manufacturing process.

As illustrated in 6A, the manufacturing process of the light deflector according to the comparative example first starts forming the support of the light deflector. More specifically, a BOX layer 162 made of oxide silicon (SiO2) is formed on a silicon support layer 161 as a substrate made of single crystal silicon (Si). Subsequently, a silicon active layer 163 made of silicon (Si) is formed on the BOX layer 162, thus forming a SOI substrate 160. On the silicon active layer 163, an oxide silicon layer 164 made of oxide silicon (SiO2) as a first protection layer is formed. A four-layer structure including the SOI substrate 160 and the oxide silicon layer 164 formed on the SOI substrate 160 in FIG. 6A, which is called the SOI substrate, is commercialized.

As illustrated in FIG. 6B, a lower electrode layer 201a for forming a lower electrode 201, a piezoelectric layer 202a made of PZT for forming a piezoelectric section 202, and an upper electrode layer 203a for forming an upper electrode 203 are sequentially formed on the oxide silicon layer 164.

As illustrated in FIG. 6C, an electrode forming process is performed to form the lower electrode 201, the piezoelectric section 202, and the upper electrode 203 by patterning the lower electrode layer 201a, the piezoelectric layer 202a, and the upper electrode layer 203a.

As illustrated in FIG. 6D, an interlayer insulating layer 165 made of oxide silicon (SiO2) is patterned on the lower electrode 201, the piezoelectric section 202, and the upper electrode 203 (a process for patterning an interlayer insulating layer). The interlayer insulating layer 165 is formed to prevent a short circuit between the lower electrode 201 and the upper electrode 203 during the formation of electrode wirings to be described later.

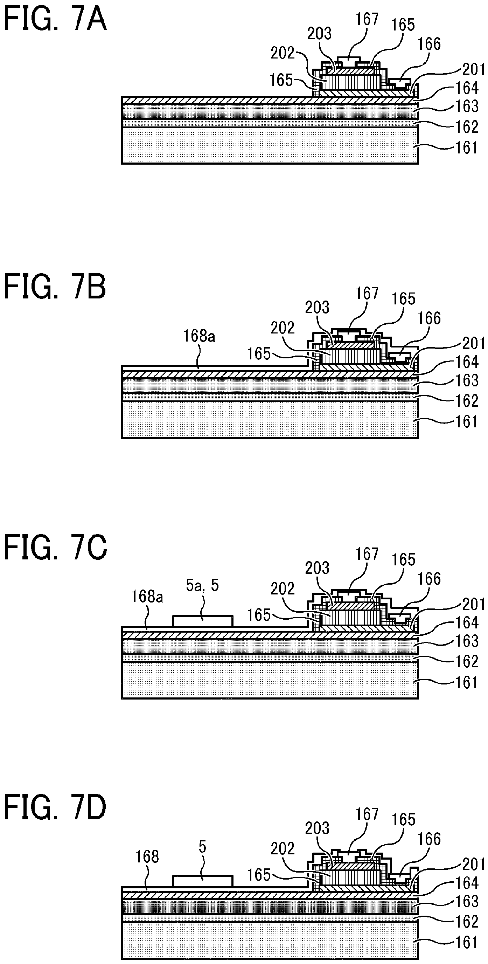

As illustrated in FIG. 7A, a wiring metal 166 made of aluminum (Al)-copper (Cu) alloy is patterned on the lower electrode 201, and a wiring metal 167 made of Al-Cu alloy is patterned on the upper electrode 203 (a process for forming wiring electrodes).

As illustrated in FIG. 7B, a silicon nitride layer 168a made of silicon nitride (SiN) as a passivation layer (a second protection layer) is formed over the interlayer insulating layer 165 and the wiring metals 167 and 201 (a process for forming a protection layer). In other words, at least the second protection layer rather than the first protection layer is formed on the oxide silicon layer 164 as the first protection layer disposed on the upper surface of the silicon active layer 163 of a bar unit, to cover the lower electrode 201, the piezoelectric section 202, and the upper electrode 203.

It is to be noted that a two-layer structure including the oxide silicon layer and the silicon nitride layer disposed on the oxide silicon layer may be formed as the passivation layer.

As illustrated in FIG. 7C, a mirror layer 5a is formed and patterned to form a reflecting surface 5 on the silicon nitride layer 168a (a process for forming a reflecting surface).

As illustrated in FIG. 7D, the silicon nitride layer 168a is patterned (a process for patterning a passivation layer). This process corresponds to the process for patterning a protection layer (at least second protection layer in the present disclosure). The passivation layer (the silicon nitride layer 168a) is patterned to form a silicon nitride layer 168.

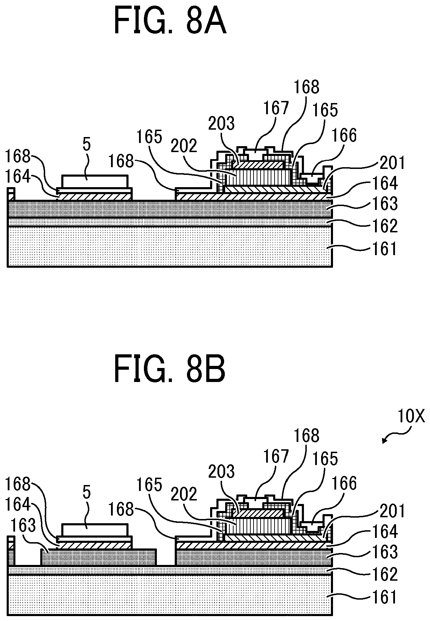

As illustrated in FIG. 8A, etching is performed on the oxide silicon layer 164 and the silicon nitride layer 168, which are protection layers (insulating layers) of the bar unit (for example, the area in which the torsion bar is formed) (a process for etching the protection layer of the bar unit). In the process for etching the protection layer for the bar unit according to the comparative example, both the silicon nitride layer 168 and the oxide silicon layer 164 are removed.

As illustrated in FIG. 8B, the silicon active layer 163 of the bar unit is etched (a process for etching the silicon active layer of the bar unit). As described above, the light deflector 10X is manufactured through the processes of FIGs. 6A through 8B in the comparative example.

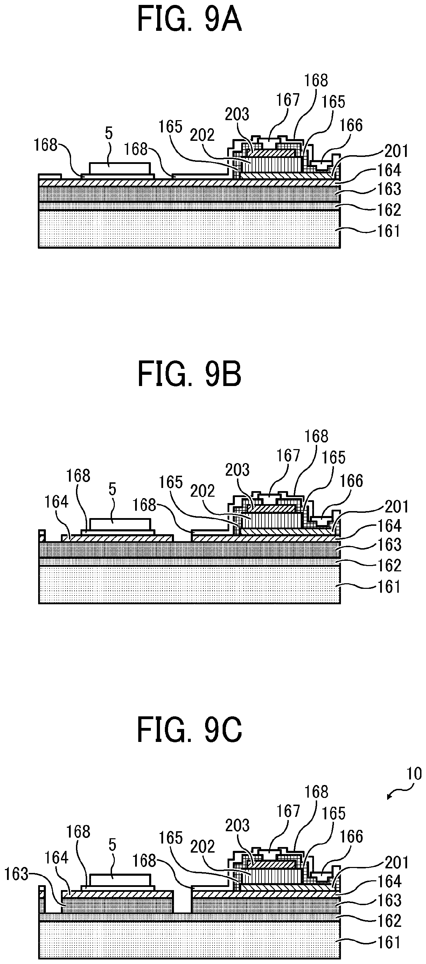

Next, a description is given of a manufacturing process of the light deflector 10 according to the present embodiment compared to the light deflector 10X according to the comparative example. The manufacturing process of the light deflector 10 according to the present embodiment differs from the manufacturing process of the light deflector 10X according to the comparative example in that the manufacturing process according to the present embodiment includes the processes in FIGs. 9A through 9C instead of the processes in FIGs. 8A and 8B. That is, the processes preceding the process in FIG. 9A according to the present embodiment are the same as the processes in FIGs. 6A through 7D according to the comparative example.

In the present embodiment as illustrated in FIG. 9A, only the silicon nitride layer 168, which is the second protection layer (the insulating layer) of the bar unit (for example, the torsion bars 111a and 111b in FIG. 2), is etched (a process for etching the silicon nitride layer of the bar unit). In other words, in the present embodiment, only the silicon nitride layer 168 is etched to be partly removed so that the oxide silicon layer 164 remains on (remains on) the silicon active layer 163. This process for etching the silicon nitride layer of the bar unit corresponds to the process for etching the second protection layer according to the present disclosure.

As illustrated in FIG. 9B, etching is performed on the oxide silicon layer 164 that is the first protection layer (the insulating layer) of the bar unit (a process for etching the oxide silicon layer of the bar unit).

Subsequently, as illustrated in FIG. 9C, the silicon active layer 163 of the bar unit is partly etched (a process for etching the silicon active layer of the bar unit). As described above, the light deflector 10 is manufactured by the processes of FIGs. 6A through 7D, and 9A through 9C in the present embodiment.

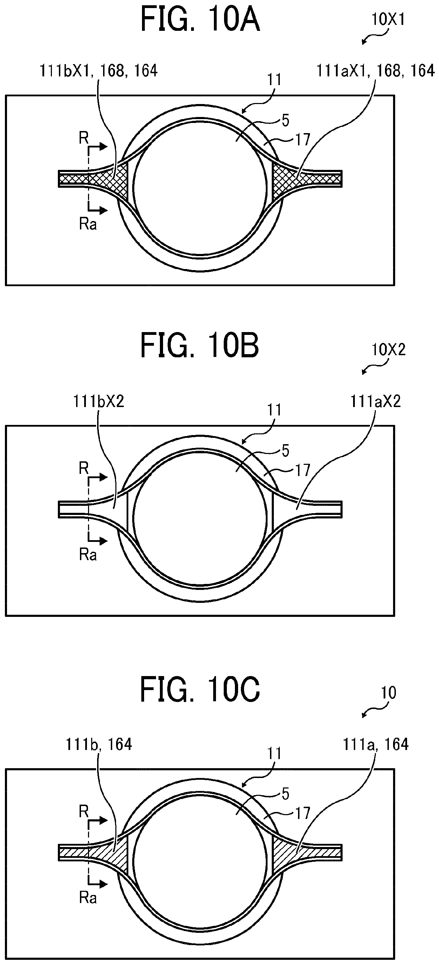

Referring to FIGs. 10 through 12, a description is given of the problems in not removing the silicon nitride layer of the bar unit in the comparative example and in removing both the silicon nitride layer 168 and the oxide silicon layer 164 (entirely removing the protection layers of the bar unit), and of a configuration according to the present embodiment for solving such problems. FIG. 10A is a plan view of the mirror unit 11, the torsion bars 111aX1 and 11 1bX1, and a surrounding thereof in the light deflector 10X1 according to a first comparative example. FIG. 10B is a plan view of the mirror unit 11, the torsion bars 111aX2 and 11 1bX2, and a surrounding thereof in the light deflector 10X2 according to a second comparative example that is different from the first comparative example of FIG. 10A. FIG. 10C is a plan view of the mirror unit 11, the torsion bars 111a and 111b, and a surrounding thereof in the light deflector 10 according to the present embodiment.

In the light deflector 10X1 according to the first comparative example of FIG. 10A, the silicon nitride layer 168 and the oxide silicon layer 164 under the silicon nitride layer 168 remain on the torsion bars 111aX1 and 111bX1 connected to the mirror unit 11 as represented by cross-hatching.

In the light deflector 10X2 according to the second comparative example of FIG. 10B, both the silicon nitride layer 168 and the oxide silicon layer 164 (the protection layers) are entirely removed from the torsion bars 111aX2 and 111bX2 connected to the mirror unit 11.

In the light deflector 10 according to the present embodiment of FIG. 10C, only the silicon nitride layer 168 is removed from the torsion bars 111a and 111b connected to the mirror unit 11, and the oxide silicon layer 164 remains on the torsion bars 111a and 111b as represented by hatched lines.

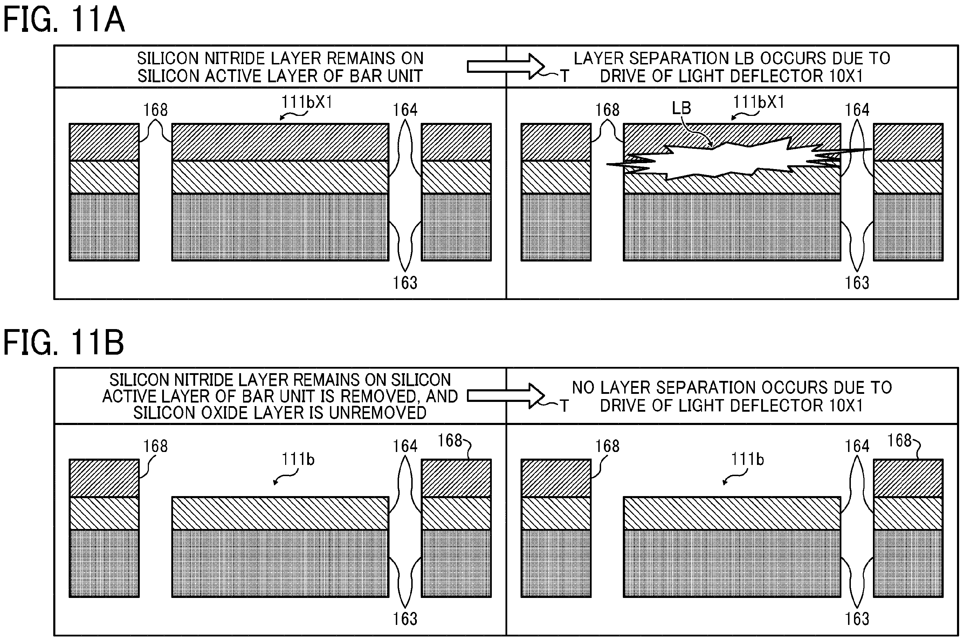

FIG. 11A is a sectional view of the torsion bar 111bX1 cut along Line R-Ra in the light deflector 10X1 according to the first comparative example in FIG. 10A. The left diagram in FIG. 11A is an illustration of a layer structure of the light deflector 10X1 in the initial drive operation. On the torsion bar 11 1bX1, the silicon active layer 163, the oxide silicon layer 164, and the silicon nitride layer 168 all remain, disposed in the recited order. The same applies to the torsion bar 111aX1 on the opposite side.

The light deflector 10X1 on the left of FIG. 11A has a problem in that the torsion bar 111bX1, which has been subjected to significantly twisted vibration during extended driving T, results in layer separation LB between the oxide silicon layer 164 and the silicon nitride layer 168 as illustrated on the right of FIG. 11A. Thus, the light deflector 10X1 as illustrated in FIG. 11A is not reliable.

The left diagram in FIG. 11B is a sectional view of the torsion bar 111b cut along Line R-Ra in the light deflector 10 according to the present embodiment in FIG. 10C. The left diagram in FIG. 11B is an illustration of a layer structure of the light deflector 10 in the initial drive operation. On the torsion bar 111b, the silicon nitride layer 168 is removed so that the oxide silicon layer 164 remains on the silicon active layer 163. The same applies to the torsion bar 111a on the opposite side.

In the light deflector 10 on the left of FIG. 11B, such a layer separation as described above does not occur in the torsion bar 111b that has been subjected to significantly twisted vibration during extended driving T. This is because the silicon nitride layer 168 is (partly) removed from the torsion bar 111b in the light deflector 10 according to the present embodiment.

Thus, the light deflector 10 according to the present embodiment is reliable, having good durability.

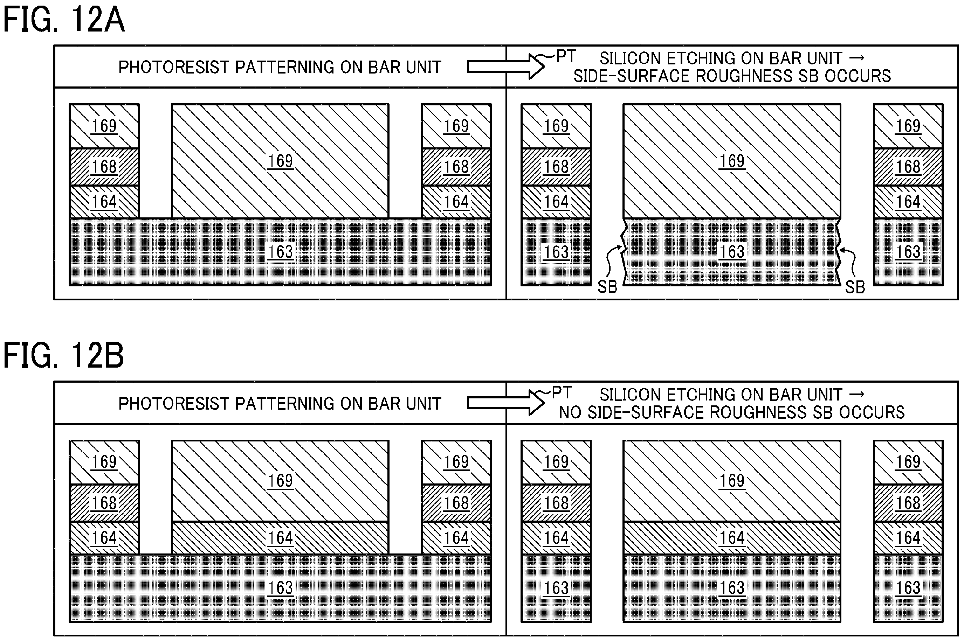

FIG. 12A is a sectional view of the torsion bar 11 1bX2 cut along Line R-Ra in the light deflector 10X2 according to the second comparative example in FIG. 10B, during the manufacturing process. The left diagram in FIG. 12A is a sectional view of the bar unit photoresist patterned after the insulating layer (the oxide silicon layer 164) of the torsion bar 11 1bX2 is etched (see FIG. 8A). The right diagram in FIG. 12A is a sectional view of the torsion bar 11 1bX2 after the silicon active layer 163 of the bar unit is etched (see FIG. 8B). The same applies to the torsion bar 111aX2.

In the process of the photoresist patterning after the insulating layer (the oxide silicon layer 164) of the torsion bar 11 1bX2 is etched, a photoresist layer 169 is patterned on the upper surface of the silicon active layer 163 and on the upper surface of the silicon nitride layer 168 on the oxide silicon layer 164, as illustrated in the left of FIG. 12A. The silicon active layer 163 of the torsion bar 111bX as the bar unit is etched through the manufacturing process PT as illustrated in the right of FIG. 12A, that is, a process for etching the silicon active layer of the bar unit is performed.

In this case, the upper surface of the silicon active layer 163 is covered with the photoresist layer 169, and the side surfaces of the silicon active layer 163 are exposed because the side surfaces of the silicon active layer 163 are not covered with any layer, resulting in the side surfaces of the silicon active layer 163 being roughed (side-surface roughness SB). More specifically, the side-surface roughness SB means that the side surfaces of the silicon active layer 163 are roughed due to etching mordant contained in etching liquid. With such a side-surface roughness SB, the silicon active layer 163 of the torsion bars 111aX2 and 111bX2 obtains an unstable side geometry, which leads to an unstable vibrating operation of the bar unit.

FIG. 12B is a sectional view of the torsion bar 111b cut along Line R-Ra in the light deflector 10 according to the present embodiment in FIG. 10C, during the manufacturing process. The left of FIG. 12B is a sectional view of the bar unit photoresist patterned after the insulating layer (the oxide silicon layer 164) of the torsion bar 111b is etched (see FIG. 9B). The right of FIG. 12B is a sectional view of the torsion bar 111b after the silicon active layer 163 of the bar unit is etched (see FIG. 9C). The same applies to the torsion bar 111a.

In the process of photoresist patterning after the insulating layer (the oxide silicon layer 164) of the torsion bar 111b is etched, only the silicon nitride layer 168 is removed by etching so that the oxide silicon layer remains on the silicon active layer 163 of the bar unit as illustrated in the left of FIG. 12B. With the oxide silicon layer 164 disposed on the silicon active layer 163 of the bar unit, the photoresist layer 169 is patterned on the upper surface of the oxide silicon layer 164. Subsequently, the silicon active layer 163 of the torsion bar 111b as the bar unit is etched through the manufacturing process PT as illustrated in the right of FIG. 12B, that is, the process for etching the silicon active layer of the bar unit is performed.

In this process, the photoresist layer 169 as well as the oxide silicon layer 164 on the silicon active layer 163 of the torsion bar 111b of the bar unit serve as a hard mask. This configuration can prevent or reduce the roughness of the side surfaces of the silicon active layer 163 patterned by etching. Thus, the silicon active layer 163 of the torsion bars 111a and 111b can obtain a stable side geometry, thereby allowing the light deflector 10 to provide a stable vibrating operation.

In the above-described embodiments, the torsion bars 111a and 111b are described as examples of the bar unit. However, no limitation is intended therein. In the piezoelectric drive unit group A or B, a deformable bar-like member formed by coupling two adjacent piezoelectric drive units, for example, the second piezoelectric drive units 132a and 132b may be used.

As described above, the configurations according to the present embodiment of this disclosure can provide a light deflector having good durability (reliability).

An additional description is given of the present embodiment. To process the silicon active layer 163 of the bar unit, there is a need for the first protection layer (for example, an oxide silicon layer 164) formed on the silicon active layer to be subjected to patterning by, for example, the dry etching technique. The dry etching technique is advantageous in controlling the processing dimension. However, variations in amount of over-etching cause the thickness of silicon of the bar unit to vary, which adversely affects the drive property of the light deflector 10.

When the second protection layer (for example, the silicon nitride layer 168) remains on the silicon active layer 163 of the bar unit, the silicon nitride layer 168 might peel off during the drive of the light deflector 10, which reduces the reliability of the light deflector 10. The configuration according to the present embodiment can solve such a problem.

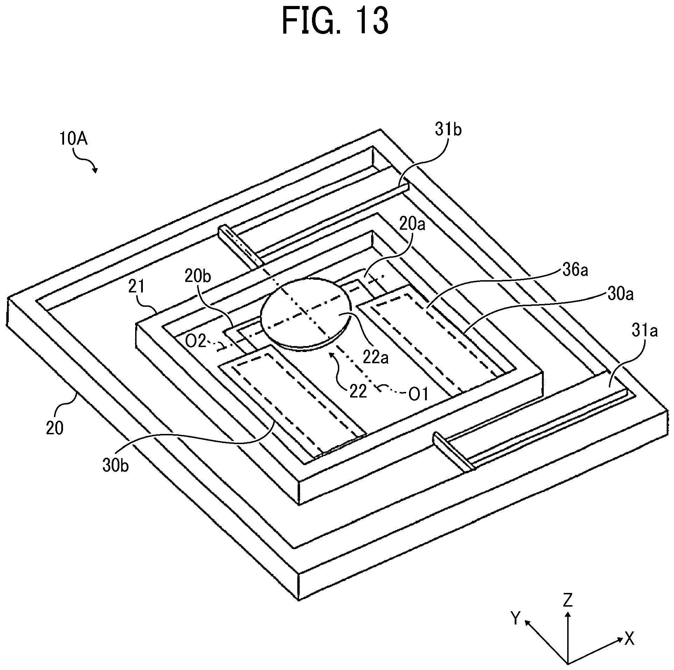

FIG. 13 is a perspective view of a light deflector 10A according to a variation of the first embodiment.

As illustrated in FIG. 13, a light deflector 10A includes a mirror unit 22, first bar units 30a and 30b, a movable frame 21 as a movable unit, and a support 20 as an immobile member. The mirror unit 22 reflects a laser light L. The first bar units 30a and 30b supports the mirror unit 22. The support 20 supports the movable frame 21.

The movable frame 21 is connected with the mirror unit 22 via the first bar units 30a and 30b. The light deflector 10A further includes second bar units 31a and 31b that connects the movable frame 21 with the support 20.

The light deflector 10A differs from the light deflector 10 of FIG. 2 in that the light deflector 10A includes the mirror unit 22 having a different shape than the mirror unit 11 of the light deflector 10, and in that the light deflector 10A includes a pair of the second bar units 31a and 31b, which are simpler than the second drive units 14a and 14b including a plurality of piezoelectric drive unit groups A and B of the light deflector 10.

The mirror unit 22 is a mirror having a mirror surface 22a as a reflecting surface having a +Z-side surface mirror-finished. The mirror unit 22 is supported by the support 20 such that the mirror unit 22 is driven to rotate when a voltage is applied to the first bar units 30a and 30b and the second bar units 31a and 31b.

The mirror surface 22a serves as a reflection member including a metal thin film, which is made of Al or Au, disposed on the surface of the silicon substrate.

The mirror unit 22 includes torsion bar springs 20a and 20b as a bar unit as well as an elastic support member, at ends to be connected with the first bar units 30a and 30b, respectively.

The mirror surface 22a has an elliptic shape having a shorter diameter along a first axis O1 direction parallel to the Y-axis than a diameter along a second axis O2 direction parallel to the X-axis.

In such a configuration of the mirror unit 22, the diameter along the direction perpendicular to the second axis O2 direction, in which the mirror unit 22 is driven to rotate at a relatively high speed, is shortened as much as possible, so that the rotational moment of inertia can be reduced during the rotational driving of the mirror unit 22.

Each of the first bar units 30a and 30b is a rectangular bar unit. The -Y-side ends of the first bar units 30a and 30b are connected to the movable member 21. The +Y-side ends of the first bar units 30a and 30b are connected to the mirror unit 22.

The first bar units 30a and 30b are disposed in a symmetrical manner, having a common structure configuration. The following describes the configuration of the first bar unit 30a, and a description of the first bar unit 30b is omitted below. The first bar unit 30a has the same configuration as that of the first piezoelectric drive units 112a and 112b of the light deflector 10, for example, in FIG. 2. That is, a lower electrode, a piezoelectric section, and an upper electrode are disposed on the +Z-side surface of a silicon active layer as an elastic member, in the recited order. The first bar units 30a and 30b serve as a pair of drive bars.

When a voltage is applied between the upper electrode and the lower electrode of the first bar unit 30a, the piezoelectric section extends and contracts in the longitudinal direction due to electrostrictive characteristics thereof, and thus the first bar unit 30a bends and deforms.

In this case, when the same-phase voltage is applied to the first bar units 30a and 30b, which are symmetrically disposed, the first bar units 30a and 30b extend and contract in the same direction, thereby driving the mirror unit 22 to rotate around the axis parallel to the X-axis in ±Z direction.

Each of the second bar units 31a and 31b is a rectangular bar unit. The +X-side ends of the second bar units 31a and 31b are connected to the support 20. The -X-side ends of the second bar units 31a and 31b are connected to the movable frame 21.

The second bar units 31a and 31b each has the same configuration as that of each of the first bar units 30a and 30a, and thereby a description of the configurations of the second bar units 31a and 31b is omitted.

Same as the first bar units 30a and 30b, when a voltage is applied between the upper electrode 34a and the lower electrode 35a of the first bar unit 30a, the movable frame 21 is driven to rotate around the axis parallel to the Y-axis in the ±Z direction.

More specifically, a voltage is applied to each of the first bar units 30a and 30b and the second bar units 31a and 31b, thereby driving the mirror unit 22 to appropriately rotate around the second axis O2 or the first axis O1.

As described above, the torsion bar spring 20a is disposed between the first bar unit 30a and the mirror unit 22, and the torsion bar spring 20b is disposed between the first bar unit 30b and the mirror unit 22.

The torsion bar springs 20a and 20b are disposed such that the longitudinal direction of each of the torsion bar springs 20a and 20b is parallel to the X-axis. In other words, the longitudinal direction of the torsion bar springs 20a and 20b is perpendicular to the longitudinal direction of the first bar units 30a and 30b, respectively. That is, the first bar units 30a and 30b vibrate in the ±Z direction perpendicular to the twist central axis of the torsion bar springs 20a and 20b.

The torsion bar springs 20a and 20b effectively converts the bending vibration of the first bar units 30a and 30b into the twist vibration of the torsion bar springs 20a and 20b, which increases the rotation angle of the mirror unit 22.

Such a configuration can further increase the rotation angle of the mirror unit 22 that is determined according to the lengths of the first bar units 30a and 30b, thus contributing to downsizing of the light deflector 10A.

Further, applying the configuration according to the first embodiment in FIGs. 11B and 12B to the torsion bar springs 20a and 20b in the light deflector 10A stabilizes the vibration operation of the bar unit, thus providing a light deflector 10A having good durability (reliability).

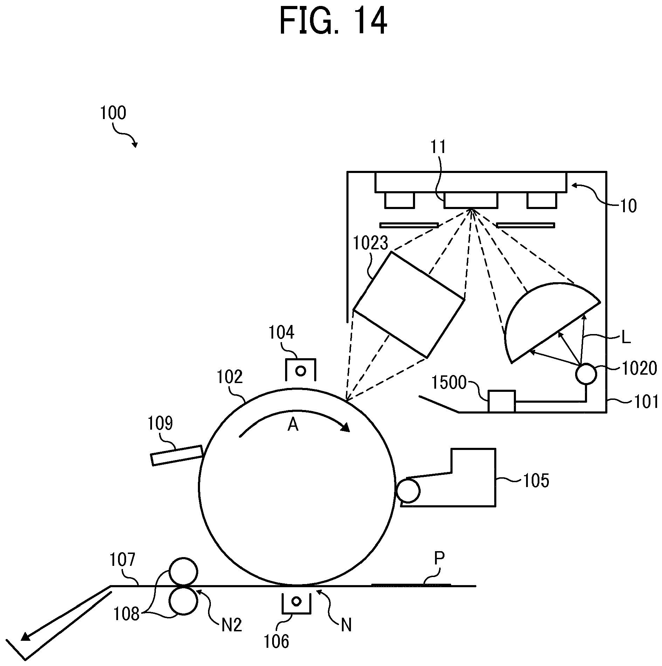

FIG. 14 is an illustration of an image forming apparatus 100 including an optical scanning device 101 as an example of a second embodiment of the present disclosure.

The image forming apparatus 100 includes a photoconductor 102, a transfer device 106, and a conveyance device 107. The photoconductor 102 serves as an image bearer to form a toner image. The transfer device 106 transfers an image formed on the photoconductor 102 onto a sheet P. The conveyance device 107 conveys the sheet P to the transfer device 106.

The image forming apparatus 100 further includes a charging device 104, an optical scanning device 101, and a developing device 105. The charging device 104 charges the surface of the photoconductor 102. The optical scanning device 101 writes an electrostatic latent image in the photoconductor 102. The developing device 105 develops the electrostatic latent image into a visual image with toner.

The image forming apparatus 100 further includes a cleaning device 109, and a fixing device 108. The cleaning device 109, which is disposed downstream of the transfer device 106 in the rotation direction A of the photoconductor 102, removes residual toner. The fixing device 108 fixes a toner image formed on the sheet P with heat and pressure.

In forming an image on the sheet P in the image forming apparatus 100, the charging device 104 first uniformly charges the surface of the photoconductor 102.

The charged surface of the photoconductor 102 is scanned by the optical scanning device 101 while rotating, and thereby an electrostatic latent image is formed on the surface of the photoconductor 102. During this operation, the surface of the photoconductor 102 is a scanned surface to be scanned by the optical scanning device 101 with a laser light L at a predetermined speed.

During the scanning operation of the optical scanning device 101, the light deflector 10 disposed in the optical scanning device 101 deflects the laser light L along a predetermined direction. More specifically, the reflecting surface of the mirror unit 11 of the light deflector 10 in FIG. 2 pivots around the first axis O1, thereby deflecting the incident laser light L along the longitudinal direction of the photoconductor 102, i.e., the main-scanning direction of the optical scanning device 101.

Further, the mirror unit 11 (the reflecting surface of the mirror unit 11) pivots around the second axis O2, thereby deflecting the incident laser light L along the circumferential direction of the photoconductor 102, i.e., the sub-sub-scanning direction of the optical scanning device 101.

The developing device 105 applies toner in the developer housed in the developing device 105 to the surface of the photoconductor 102, developing the electrostatic latent image into a visual image.

The transfer device 106 forms a nip N between the photoconductor 102 and the transfer device 106, and transfers a toner image onto the sheet P passing through the nip N.

The conveyance device 107 is a conveyance belt to convey the sheet P to the nip N at a time when the toner image formed on the photoconductor 102 reaches the nip N, using a registration roller pair disposed on the path of the conveyance device 107, so that the toner image is formed on an image-forming area in the sheet P.

The fixing device 108 forms a fixing nip N2, and applies heat and pressure to toner of the toner image on the sheet P passing through the fixing nip N2 to be melted, thereby fixing the toner image on the sheet P as an image.

The residual toner on the surface that has passed through the nip N of the photoconductor 102 is removed by the cleaning device 109.

In the present embodiment, the image bearer is the photoconductor 102 that is a cylindrical. However, no limitation is indicated hereby. Alternatively, the image bearer may be a belt-shaped rotator.

The image forming apparatus 100 may have a configuration that primarily transfers a toner image from the photoconductor 102 onto a transfer medium, such as a transfer belt, other than the sheet P, and secondarily transfers the toner image from the transfer medium onto the sheet P.

In the present embodiment, the cases where the image forming apparatus 100 is a monochrome image forming apparatus are described. In some embodiments, a multicolor image forming apparatus is applicable.

The optical scanning device 101 includes a light-source unit 1020 as a light source, a light-source drive device 1500, and a light deflector 10. The light-source unit 1020 emits at least one laser light L modulated by a recording signal. The light-source drive device 1500 modulates the emitted laser light L. The light deflector 10 deflects the laser light L.

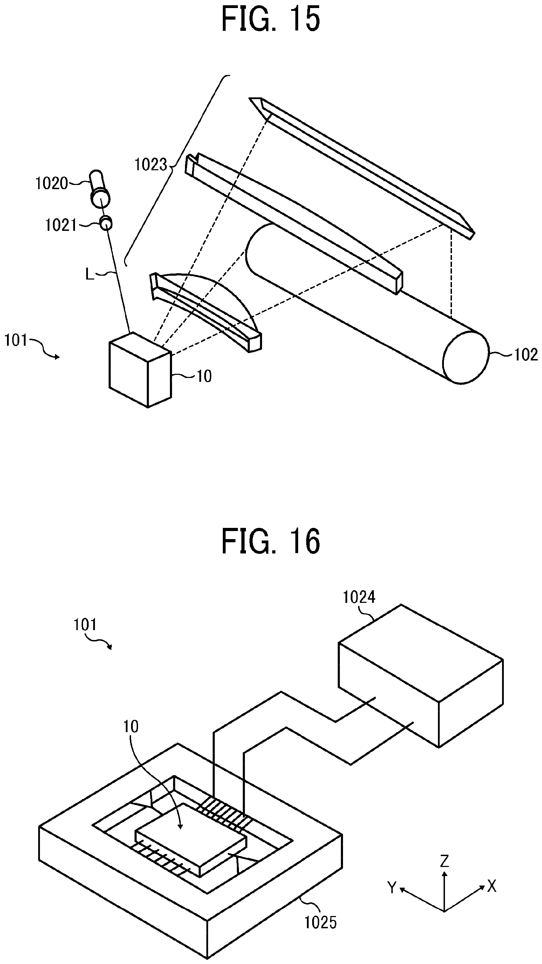

The optical scanning device 101 includes an image-forming optical system 1021 and a scanning optical system 1023 as illustrated in FIG. 15. The image-forming optical system 1021 forms an image of the laser light L in the mirror unit 11 as the reflecting surface of the light deflector 10. The scanning optical system 1023 forms an image on the surface of the photoconductor 102 with the laser light L reflected by the mirror unit 11.

The optical scanning device 101 includes a mirror drive device 1024 as an integrated circuit (IC) for driving the mirror unit 11 and a circuit board 1025 as a controller as illustrated in FIG. 16. The mirror drive device 1024 applies a voltage to the light deflector 10 to drive the mirror unit 11 to pivot and vibrate.

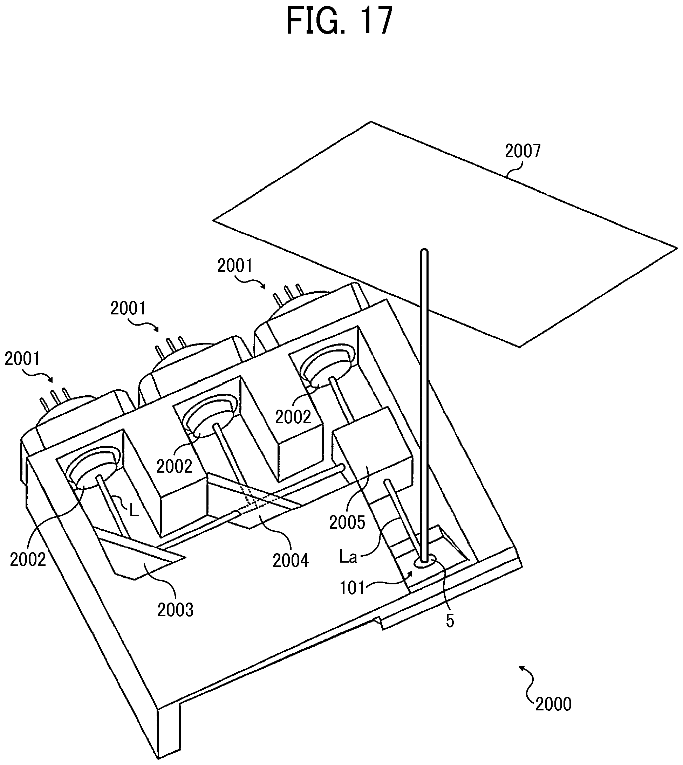

FIG. 17 is an illustration of an example configuration of the image projection apparatus 2000 including the light deflector 10 according to a third embodiment.

As illustrated in FIG. 17, the image projection apparatus 2000 includes three laser light sources 2001 and three lenses 2002 corresponding to the laser light sources 2001, respectively. The laser light sources 2001 emit laser beams of three different wavelengths of red (R), green (G), and blue (B) colors, respectively. Each of the lenses 2002 is a condensing optical system to collimate a laser light L emitted from each of the laser light sources 2001.

The image projection apparatus 2000 further includes a mirror 2003, a half mirror 2004, and a combining prism 2005. The mirror 2003 is fixed to a housing of the image projection apparatus 2000.

The image projection apparatus 2000 further includes the light deflector 10 having the configuration according to the first embodiment and an optical scanning device 101 including the light deflector 10.

The image projection apparatus 2000 projects an image onto a screen 2007 as a projection plane.

The laser light sources 2001 emit laser light L, and the emitted laser light L is deflected by the mirror 2003 and the half mirror 2004, entering the combining prism 2005. The combining prism 2005 combines the incident laser light L having three wavelengths into one laser beam La, and the laser beam La enters the optical scanning device 101.

The laser beam La is reflected by the reflecting surface 5 of the light deflector 10, and is projected onto the screen 2007.

Although the embodiments of the present disclosure have been described above, the present disclosure is not limited to the embodiments described above, but a variety of modifications can naturally be made. For example, the technical features described in the above-described embodiments may be combined as appropriate.

In the above-described embodiments for example, the image projection apparatus 2000 may be a projector to perform an optical scanning, such as a LiDAR (Light Detection and Ranging).

In the above-described embodiment, only the cases where the light deflector is a biaxially pivotable light deflector with a reflecting surface supported for pivoting about two axes are described. However, no limitation is intended herein. In some embodiments, the light deflector may pivot about one axis. In the image forming apparatus, the recording medium may be a film, a recording sheet, a fabric, and a printed circuit board, in addition to a sheet of paper.

Although the embodiment of the present disclosure has been described above, the present disclosure is not limited to the foregoing embodiments, but a variety of modifications can naturally be made.

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. The scope of the present invention is defined by the appended claims.

## Claims

1. A light deflector (10) comprising:
a movable unit (11) having a reflecting surface (5) to reflect light;
a support (13 and 15) to support the movable unit (11); and
a bar unit (111a, 111b, 112a, and 112b) connecting the movable unit (11) with the support (13 and 15),
the bar unit (111a, 111b, 112a, and 112b) including:
a pair of elastic support members (111a and 11 1b) to movably support the movable unit (11); and
a pair of drive bars (112a and 112b) each including a silicon active layer (163), a piezoelectric section (202), a first protection layer (164), and a second protection layer (168) in the recited order,
wherein the first protection layer (164) is an oxide silicon layer, and
wherein the second protection layer (168) is a silicon nitride layer,
wherein in a process for etching, only the silicon nitride layer is etched to be partly removed and the oxide silicon layer of the first protection layer (164) remains on the silicon active layer (163),
the pair of elastic support members (111a and 11 1b) each including the first protection layer (164), but not the second protection layer (168),
one end of the respective drive bar (112a, 112b) being connected with the respective end of the elastic support member (111a, 111b).

2. The light deflector (10) according to claim 1,
wherein a longitudinal direction of each of the pair of elastic support members (111a and 11 1b) is perpendicular to a longitudinal direction of each of the pair of drive bars (112a and 112b),
wherein a first end of each of the pair of drive bars (112a and 112b) is connected to each of the pair of elastic support members (111a and 111b), and a second end of each of the pair of drive bars (112a and 112b) is fixed onto the support (13 and 15), and
wherein the movable unit (11) and the pair of elastic support members (111a and 11 1b) are supported by the support (13 and 15) via the pair of drive bars (112a and 112b).

3. An optical scanning device (101) comprising the light deflector (10) according to any of claims 1 or 2, to project light deflected by the light deflector onto a surface to be scanned by the optical scanning device (101), at a predetermined speed.

4. An image forming apparatus (100) comprising the optical scanning device (101) according to claim 3.

5. An image projection apparatus (2000) comprising the optical scanning device (101) according to claim 3.

6. A method for manufacturing a light deflector (10) as defined in claim 1, comprising:
forming, in the recited order, a lower electrode (201), a piezoelectric section (202), and an upper electrode (203) on a first protection layer (164) disposed on a silicon active layer (163) of a bar unit (111a, 111b, 112a, and 112b);
forming on the second protection layer (168) the reflecting surface (5) to reflect light;
patterning the second protection layer (168); and
etching only the silicon nitride layer of the second protection layer (168) such that the second protection layer (168) is partly removed and the oxide silicon layer of the first protection layer (164) remains on the silicon active layer (163) of the bar unit (111a, 111b, 112a, and 112b).

## Patentansprüche

1. Lichtdeflektor (10) mit:
einer beweglichen Einheit (11) mit einer reflektierenden Oberfläche (5) zur Reflexion von Licht;
einer Halterung (13 und 15) zum Haltern der beweglichen Einheit (11); und
einer Strebeneinheit (111a, 111b, 112a und 112b), die die bewegliche Einheit (11) mit der Halterung (13 und 15) verbindet,
wobei die Strebeneinheit (111a, 111b, 112a und 112b) umfasst:
ein Paar elastischer Halterungselemente (111a und 111b) zur beweglichen Halterung der beweglichen Einheit (11); und
ein Paar Antriebsstreben (112a und 112b), die jeweils eine siliziumaktive Schicht (163), einen piezoelektrischen Abschnitt (202), eine erste Schutzschicht (164) und eine zweite Schutzschicht (168) in der genannten Reihenfolge umfassen,
wobei die erste Schutzschicht (164) eine Oxid-Silizium-Schicht ist, und
wobei die zweite Schutzschicht (168) eine Siliziumnitridschicht ist,
wobei bei einem Verfahren zum Ätzen nur die Siliziumnitridschicht zur teilweisen Entfernung geätzt wird und die Oxid-Silizium-Schicht der ersten Schutzschicht (164) auf der siliziumaktiven Schicht (163) verbleibt,
wobei das Paar elastischer Halterungselemente (111a und 111b) jeweils die erste Schutzschicht (164), nicht jedoch die zweite Schutzschicht (168) umfasst,
wobei ein Ende der jeweiligen Antriebsstrebe (112a, 112b) mit dem jeweiligen Ende des elastischen Halterungselements (111a, 111b) verbunden ist.

2. Lichtdeflektor (10) nach Anspruch 1,
wobei eine Längsrichtung jedes Paares elastischer Halterungselementen (111a und 111b) senkrecht zu einer Längsrichtung jedes Paares von Antriebsstreben (112a und 112b) liegt,
wobei ein erstes Ende jedes der Paare von Antriebsstreben (112a und 112b) mit jedem der Paare von elastischen Halterungselementen (111a und 111b) verbunden ist und ein zweites Ende jedes Paares von Antriebsstreben (112a und 112b) an der Halterung (13 und 15) befestigt ist, und
wobei die bewegliche Einheit (11) und das Paar elastischer Halterungselemente (111a und 111b) von der Halterung (13 und 15) über das Paar von Antriebsstangen (112a und 112b) gehaltert werden.

3. Optische Abtastvorrichtung (101) mit dem Lichtdeflektor (10) nach einem der Ansprüche 1 oder 2, zum Projizieren von durch den Lichtdeflektor abgelenktem Licht auf eine Oberfläche, die mit einer vorbestimmten Geschwindigkeit von der optischen Abtastvorrichtung (101) abgetastet werden soll.

4. Bilderzeugungsvorrichtung (100) mit der optischen Abtastvorrichtung (101) nach Anspruch 3.

5. Bildprojektionsvorrichtung (2000) mit der optischen Abtastvorrichtung (101) nach Anspruch 3.

6. Verfahren zur Herstellung eines Lichtdeflektors (10), wie er in Anspruch 1 definiert ist, mit den folgenden Schritten:
in der angegebenen Reihenfolge werden eine untere Elektrode (201), ein piezoelektrischer Abschnitt (202) und eine obere Elektrode (203) auf einer ersten Schutzschicht (164) ausgebildet, die auf einer siliziumaktiven Schicht (163) einer Strebeneinheit (111a, 111b, 112a und 112b) angeordnet ist;
auf der zweiten Schutzschicht (168) wird die reflektierende Oberfläche (5) ausgebildet, um Licht zu reflektieren;
die zweite Schutzschicht (168) wird gemustert; und
nur die Siliziumnitridschicht der zweiten Schutzschicht (168) wird geätzt, so dass die zweite Schutzschicht (168) teilweise entfernt wird und die Oxid-Silizium-Schicht der ersten Schutzschicht (164) auf der siliziumaktiven Schicht (163) der Strebeneinheit (111a, 111b, 112a und 112b) verbleibt.

## Revendications

1. Déflecteur de lumière (10) comprenant :
une unité mobile (11) ayant une surface réfléchissante (5) pour réfléchir de la lumière ;
un support (13 et 15) pour supporter l'unité mobile (11) ; et
une unité de barre (111a, 111b, 112a, et 112b) raccordant l'unité mobile (11) au support (13 et 15),
l'unité de barre (111a, 111b, 112a, et 112b) comportant :
une paire d'éléments de support élastiques (111a et 111b) pour supporter de manière mobile l'unité mobile (11) ; et
une paire de barres d'entraînement (112a et 112b) comportant chacune une couche active de silicium (163), une section piézoélectrique (202), une première couche de protection (164), et une deuxième couche de protection (168) dans l'ordre indiqué,
dans lequel la première couche de protection (164) est une couche de silicium-oxyde, et
dans lequel la deuxième couche de protection (168) est une couche de nitrure de silicium,
dans lequel dans un processus de gravure, la couche de nitrure de silicium uniquement est gravée pour être en partie éliminée et la couche de silicium-oxyde de la première couche de protection (164) demeure sur la couche active de silicium (163),
la paire d'éléments de support élastiques (111a et 111b) comportant chacun la première couche de protection (164), mais pas la deuxième couche de protection (168),
une extrémité de la barre d'entraînement (112a, 112b) respective étant raccordée à l'extrémité respective de l'élément de support élastique (111a, 111b).

2. Déflecteur de lumière (10) selon la revendication 1,
dans lequel une direction longitudinale de chacun de la paire d'éléments de support élastiques (111a et 111b) est perpendiculaire à une direction longitudinale de chacune de la paire de barres d'entraînement (112a et 112b),
dans lequel une première extrémité de chacune de la paire de barres d'entraînement (112a et 112b) est raccordée à chacun de la paire d'éléments de support élastiques (111a et 111b), et une deuxième extrémité de chacune de la paire de barres d'entraînement (112a et 112b) est fixée sur le support (13 et 15), et
dans lequel l'unité mobile (11) et la paire d'éléments de support élastiques (111a et 111b) sont supportés par le support (13 et 15) par le biais de la paire de barres d'entraînement (112a et 112b).

3. Dispositif de balayage optique (101) comprenant le déflecteur de lumière (10) selon l'une quelconque des revendications 1 ou 2, pour projeter de la lumière déviée par le déflecteur de lumière sur une surface à balayer par le dispositif de balayage optique (101), à une vitesse prédéterminée.

4. Appareil de formation d'image (100) comprenant le dispositif de balayage optique (101) selon la revendication 3.

5. Appareil de projection d'image (2000) comprenant le dispositif de balayage optique (101) selon la revendication 3.

6. Procédé de fabrication d'un déflecteur de lumière (10) tel que défini dans la revendication 1, comprenant :
la formation, dans l'ordre indiqué, d'une électrode inférieure (201), d'une section piézoélectrique (202), et d'une électrode supérieure (203) sur une première couche de protection (164) disposée sur une couche active de silicium (163) d'une unité de barre (111a, 111b, 112a, et 112b) ;
la formation sur la deuxième couche de protection (168) de la surface réfléchissante (5) pour réfléchir de la lumière ;
la création d'un motif sur la deuxième couche de protection (168) ; et
la gravure de la couche de nitrure de silicium uniquement de la deuxième couche de protection (168) de sorte que la deuxième couche de protection (168) soit en partie éliminée et que la couche silicium-oxyde de la première couche de protection (164) demeure sur la couche active de silicium (163) de l'unité de barre (111a, 111b, 112a, et 112b).
